# EUROPÄISCHE PATENTSCHRIFT

(11) **EP 1 884 502 B1**
(45) Veröffentlichungstag und Bekanntmachung des Hinweises auf die Patenterteilung: **07.10.2009**
(21) Anmeldenummer: 07014604.8
(22) Anmeldetag: 25.07.2007
(51) Int. Cl.: C04B 18/18, C04B 28/26, E04B 1/76, E04C 2/16, E04F 13/02, E04B 1/74

(54) **Wärme- und/oder Schalldämmmaterial und Wärmedämmputz, Oberputz sowie Dämmplatte, umfassend solch ein Material**
Thermal and/or acoustic insulation material and thermal insulation plaster, finishing coat and insulation board, containing such a material
Matériau d'isolation thermique et/ou phonique et enduit d'isolation thermique, enduit de base, tout comme plaque d'isolation comprenant un tel matériau

(30) Priorität: 26.07.2006 DE 102006035235
(43) Veröffentlichungstag der Anmeldung: 06.02.2008
(73) Patentinhaber: Helmut Reichel Putz- und Farbengesellschaft mbH, 35216 Biedenkopf-Wallau (DE)
(72) Erfinder: Reichel, Helmut, 35216 Biedenkopf-Kombach (DE)
(74) Vertreter: Weber-Bruls, Dorothée

(56) Entgegenhaltungen:
- DD-A1- 236 300
- DE-A1-102004 046 410
- DE-U1- 29 501 290
- FR-A- 2 844 816

## Beschreibung

Die vorliegende Erfindung betrifft ein Wärme- und/oder Schalldämmmaterial, umfassend natürliche Materialien, wobei zerkleinerte Federn von Tieren und ein Bindemittel zum Einsatz kommen, und einen Wärmedämmputz, einen Oberputz sowie ein Wärmedämmverbundsystem mit einer Dämmplatte für den Innen- sowie Außenbereich mit solch einem Wärme- und/oder Schalldämmmaterial.

Im Zuge der fortschreitenden Umweltbelastungen ist es zu einem Bedürfnis geworden, zunehmend ökologisch unbedenkliche Materialien zu verwenden, die für spätere Generationen nicht zu einem Entsorgungsproblem führen. Die Entwicklung von ökologisch unbedenklichen Werkstoffen hat dadurch immer größere Wertschätzung erhalten.

Zudem gehen die Ölreserven der Erde in absehbarer Zeit zur Neige, so daß daraus hergestellte Dämmstoffe, die üblicherweise Styropor umfassen, unabsehbare Kosten verursachen. Auch belasten sie durch ihren Herstellungsprozeß unsere Atmosphäre.

Insgesamt besteht daher der Trend, sich auf natürliche Materialien zu besinnen. Tatsächlich ist es bereits seit hunderten von Jahren bekannt, Federn von Vieh und Stroh in Lehmmörtel zu vermischen, um gute Dämmeigenschaften zu erreichen.

Es ist beispielsweise ein gattungsgemäßes Wärme- und/oder Schalldämmmaterial aus der DE 295 01 290 U1 bekannt. Dort ist ein Preßkörper aus einem gemeinsam mit einem Bindemittel verpreßten Füllmaterial, das zumindest teilweise aus tierischen Federn besteht, offenbart, wobei die Federn gehächselt werden, um die Teilchengröße etwa auf die Größe von maximal 10 bis 15 mm zu beschränken. Als Bindemittel wird entweder ein Isocyanatkleber oder ein ökologischer Binder, wie Lignin oder Tannin, verwendet. Zwar hat sich dieser Preßkörper grundsätzlich bewährt, bedarf jedoch zur Steigerung seiner Festigkeit das Anlegen eines hohen Druckes und ist der Gefahr der Verrottung insbesondere bei Verwendung als Außenmaterial ausgesetzt.

Die FR 2 844 816 A offenbart ein Dämmmaterial in Form einer flexiblen Decke, die aus einem Gemisch aus tierischen Federn und polymer-basierten Fasern besteht. Zur Herstellung dieser Dämmdecke werden die polymer-basierten Fasern erhitzt und mit den Federn zusammengeschweißt.

Ferner sind noch zahlreiche weitere natürliche Dämmmaterialien im Stand der Technik bekannt.

So wird mit der EP 0 578 107 A1 vorgeschlagen, Fliesstoffe aus Baumwollfasern oder anderen cellulosischen Fasern, welche zur Stabilisierung eines Flieses vernadelt werden, als Verpackungsmaterial, in Putz- oder Wischtüchern, in Fliesstoffmatten oder Platten, als wasserspeichernden Matten, als ölaufsaugende Matten oder als Wärme- und/oder Schalldämmmaterial zu verwenden.

Die DE 197 15 310 A1 betrifft einen wärmedämmenden Baustoff, der als Füllmaterial eine Mischung aus Flachs- und/oder Hanfschäben und als Bindemittel Zement, Gips, Kunstharzbindemittel oder Polyvenylacetat verwendet.

In der DD 236 300 A1 ist ein spritzfähiger Wärmedämmputz beschrieben, der aus einem fließfähigen hydraulischen Bindemittel, zerkleinerten Textilmaterialien sowie einem schaumfördernden Netzmittel besteht. Zusätzlich wird der Wärmedämmputz vor dem Aufspritzennoch mit Natronwasserglas und cellulosischem Hydrogel versetzt. Das verwendeteTextilmaterial besteht aus synthetischen oder cellulosischen Fasern mit einer maximalen Länge von 10 mm.

Ein weiterer Wärmedämmputz als Unterputz für Außen- und Innenbereiche ist aus der DE 10 2004 046 410 A1 bekannt, der Zement enthält.

Die DE 10 2004 038 447 A1 offenbart ein Dämmelement aus Mineralfasern und ein Wärmedämmverbundsystem für Gebäudeflächen.

Aufgabe der vorliegenden Erfindung ist es nunmehr, daß gattungsgemäße Wärme- und/oder Schalldämmmaterial derart weiterzuentwickeln, daß es auf einfache und kostengünstige Weise herstellbar sowie robust ist.

Diese Aufgabe wird erfindungsgemäß dadurch gelöst, daß die Federn von Tieren im naturbelassenen Zustand auf eine Länge von maximal bis zu 3 mm zermahlen und mit dem Bindemittel, das, insbesondere bei Befeuchtung, eine alkalische Umgebung für die Federn bereitstellt, vermischt sind.

Dabei ist bevorzugt, daß das Bindemittel Wasserglas, eine Wasserglasverbindung, Kalk, Zement und/oder Lehm umfaßt.

Ferner wird vorgeschlagen, daß die Federn bereitgestellt sind von Gefieder von Geflügel, insbesondere Wassergeflügel.

Gemäß der Erfindung kann ebenfalls vorgesehen sein, daß es als Putzmaterial, insbesondere im Oberputz oder Unterputz, oder als Dämmplatte, insbesondere im Außenbereich, einsetzbar ist.

Die Erfindung betrifft des weiteren einen Wärmdämmputz, der auf einer Außenwand aufgebracht, mit einem Oberputz als Schlußbeschichtung versehen ist, wobei der Wärmedämmputz ein erfindungsgemäßes Wärme- und/oder Schalldämmmaterial umfaßt.

Auch ein Oberputz, der auf einer Außenwand als Schlußbeschichtung aufgebracht ist und gekennzeichnet ist durch ein erfindungsgemäßes Wärme- und/oder Schalldämmmaterial wird erfindungsgemäß vorgeschlagen.

Dabei kann vorgesehen sein, daß auf der Außenwand zuerst, insbesondere über eine Klebemasse, ein Unterputz oder zumindest eine Dämmplatte und darauf der Oberputz aufbringbar ist.

Schließlich betrifft die Erfindung auch ein Wärmedämmverbundsystem umfassend eine Dämmplatte ,die ein erfindungsgemäßes Wärme- und/oder Schalldämmmaterial umfaßt.

Dabei kann vorgesehen sein, daß das Wärmedämmverbundsystem auf einer Außenwand eine Klebemasse, darauf zumindest eine Dämmplatte, auf der Dämmplatte eine Armierungsschicht und auf der Armierungsschicht eine Schlußbeschichtung aufweist.

Der Erfindung liegt somit die überraschende Erkenntnis zugrunde, daß Federn auch im naturbelassenen Zustand selbst in einem Außenputz oder in Wärmedämmverbundsystemen im Außenbereich eingesetzt werden können, wenn sie ausreichend zerkleinert sind, nämlich eine maximale Länge von 3mm aufweisen, und in einer alkalischen Umgebung gelagert sind. Dadurch, daß die Federn durch ein Zermahlen auf eine sehr geringe Größe zerkleinert werden, können die zerkleinerten Federn nicht nur in herkömmlichen Putzmaschinen verarbeitet werden, sondern weisen auch eine vergrößerte Oberfläche und somit eine höhere Dämmwirkung auf. Des weiteren kommt es zu einer Verklettung der zermahlenen Federn, die zu einer hohen Zugfestigkeit führt und selbst den Einsatz eines Armierungsgewebes überflüssig macht. Ein Milbenbefall der naturbelassenen Federn wird zudem natürlich dadurch vermieden, daß die zermahlenen Federn mit einem Bindemittel gemischt werden, das bei Einwirkung von Feuchtigkeit eine chemische Reaktion durchläuft, die die Umgebung der Federn alkalisch werden läßt, so daß Milben nicht überleben können. Somit stellen die zermahlenen, naturbelassenen Federn ein natürliches Ersatzmittel von bislang üblichen Styroporkugeln, Styropor-Hartschaum, Polystyrol-Hartschaum und dergleichen dar, was nicht nur umweltfreundlich ist, sondern zudem auch Entsorgungsprobleme löst. So fallen Federreste als Abfallprodukte bei der Feder- und Daunenbettherstellung sowie der Daunenjackenherstellung ab, die in dem erfindungsgemäßen Wärme- und/oder Schalldämmmaterial zum Einsatz kommen können.

Wasserglas ist kein Kälteleiter und eignet sich somit besonders für den Einsatz als Bindemittel in einem erfindungsgemäßen Wärme- und/oder Schalldämmmaterial. Zudem weist es den Vorteil auf, daß es beim Einsatz im Holzbau einem Aufbau ein notwendiges Gewicht verleihen kann.

Weitere Merkmale und Vorteile der Erfindung ergeben sich aus der nachstehenden Beschreibung, in der drei Ausführungsbeispiele der Erfindung anhand schematischer Zeichnungen im Einzelnen erläutert sind. Dabei zeigt:
- Fig. 1: eine Teilschnittansicht eines erfindungsgemäßen Wärmedämmputzes auf einer Außenwand;
- Fig. 2: eine Teilschnittansicht eines erfindungsgemäßen Oberputzes auf einer Außenwand; und
- Fig. 3: eine Teilschnittansicht einer erfindungsgemäßen Dämmplatte in einem Wärmedämmverbundsystem auf einer Außenwand.

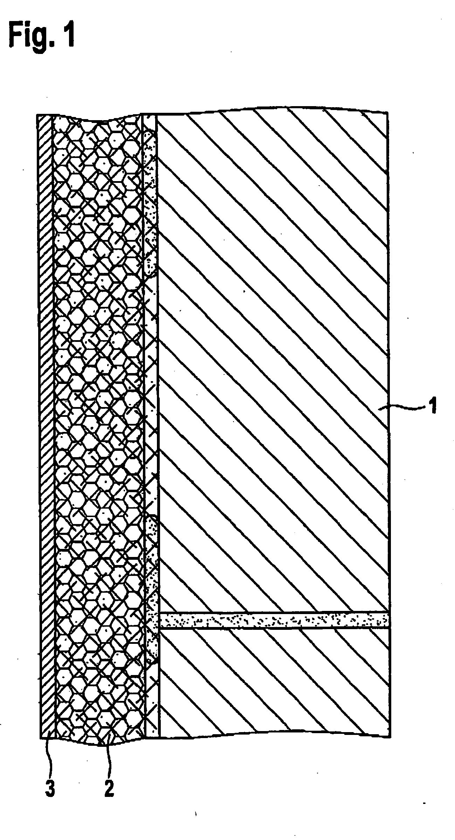

Wie Fig. 1 zu entnehmen ist, ist auf eine Wand 1 ein Wärmedämmputz 2 und darauf ein Oberputz 3 aufgebracht. Der Wärmedämmputz 2 umfaßt dabei erfindungsgemäß zermahlene Federn sowie ein Bindemittel, das bei Befeuchtung alkalisch wird. Bei dem Oberputz 3 handelt es sich um einen üblichen Oberputz.

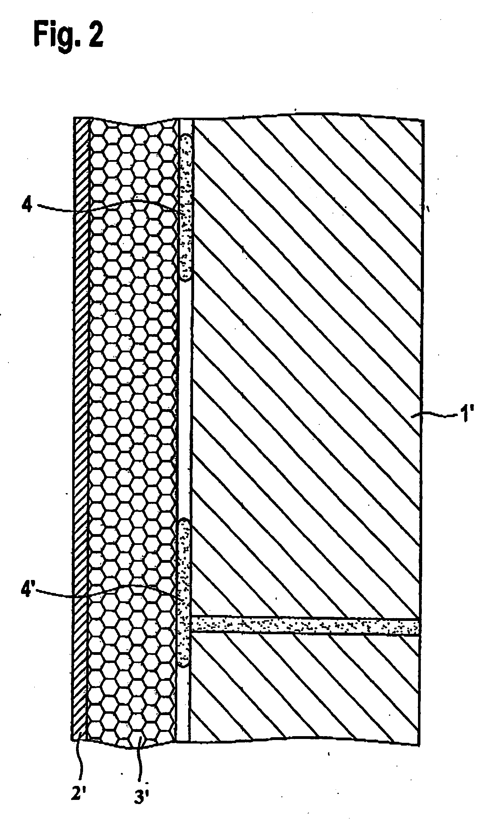

In Fig. 2 ist eine Außenwand 1' dargestellt, die, von außen nach innen, mit einem Oberputz 2', einer Dämmplatte 3' und einer Klebemasse 4' versehen ist. Der Oberputz 2' stellt dabei eine Schlußbeschichtung dar, die zermahlene, naturbelassene Federn zur Armierung gegen Rißbildungen aufweist, während die Dämmplatte 3' von üblicher Natur ist.

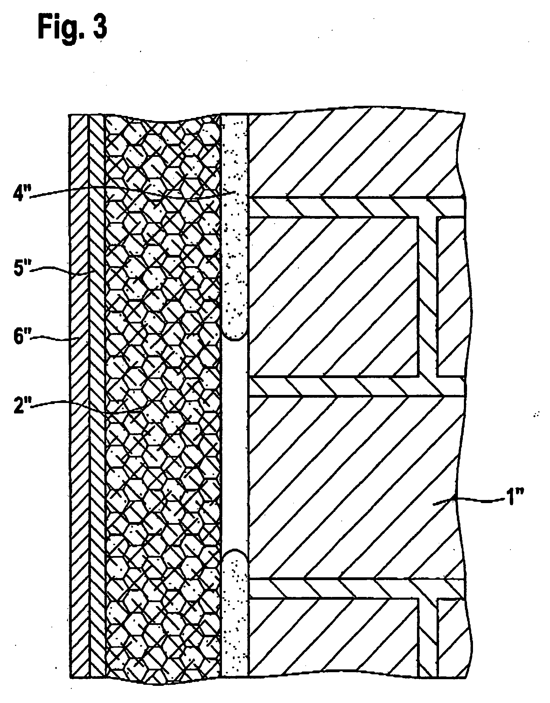

Ein Wärmedämmverbundsystem ist in Fig. 3 dargestellt. Dabei sind auf einer Außenwand 1" eine Dämmplatte 2" unter Zwischenschaltung einer Klebemasse 4" und auf der Dämmplatte 2' zuerst eine Armierungsschicht 5" und sodann eine Schlußbeschichtung 6" aufgebracht. Die Klebemasse 4" dient dabei der Aufbringung der Dämmplatte 2", die zerkleinerte Naturfedern in Mischung mit einem Bindemittel umfaßt. Die Armierungsschicht 5" sowie die Schlußbeschichtung 6" sind von üblicher Natur.

Es sind noch zahlreiche weitere Varianten zum Einsatz eines erfindungsgemäßen Wärme- und/oder Schalldämmmaterial aus naturbelassenen, auf eine Länge von maximal 3mm zerkleinerten Federn und einem Bindemittel, das bei Befeuchtung alkalisch wird, denkbar. Abschließend sei noch angemerkt, daß unter dem Begriff Federn im Sinne dieser Anmeldung Federn im eigentlichen Sinne, Gefieder und Daunen zu verstehen sind.

## Patentansprüche

1. Wärme- und/oder Schalldämmmaterial, umfassend natürliche Materialen, wobei zerkleinerte Federn von Tieren und ein Bindemittel zum Einsatz kommen, **dadurch gekennzeichnet, daß**
die Federn von Tieren im naturbelassenen Zustand auf eine Länge von maximal bis zu 3 mm zermahlen und mit dem Bindemittel, das, insbesondere bei Befeuchtung, eine alkalische Umgebung für die Federn bereitstellt, vermischt sind.

2. Wärme- und/oder Schalldämmmaterial nach Anspruch 1, **dadurch gekennzeichnet, daß** das Bindemittel Wasserglas, eine Wasserglasverbindung, Kalk, Zement und/oder Lehm umfaßt.

3. Wärme- und/oder Schalldämmmaterial nach Anspruch 1 oder 2, **dadurch gekennzeichnet, daß**
die Federn bereitgestellt sind von Gefieder von Geflügel, insbesondere Wassergeflügel.

4. Wärme- und/oder Schalldämmmaterial nach einem der vorangehenden Ansprüche,
**dadurch gekennzeichnet, daß**
es als Putzmaterial, insbesondere im Oberputz oder Unterputz, oder als Dämmplatte, insbesondere im Außenbereich, einsetzbar ist.

5. Wärmedämmputz (2), der auf einer Außenwand (1) aufgebracht und mit einem Oberputz (3) als Schlußbeschichtung versehen ist, **dadurch gekennzeichnet, daß**
der Wärmedämmputz (2) ein Wärme- und/oder Schalldämmmaterial nach einem der vorangehenden Ansprüche umfaßt.

6. Oberputz (2'), der auf einer Außenwand (1') als Schlußbeschichtung aufgebracht ist,
**gekennzeichnet durch**
ein Wärme- und/oder Schalldämmmaterial nach einem der Ansprüche 1 bis 4.

7. Oberputz nach Anspruch 6, **dadurch gekennzeichnet, daß**
auf der Außenwand (1') zuerst, insbesondere über eine Klebemasse (4'), ein Unterputz oder zumindest eine Dämmplatte (3') und darauf der Oberputz (2') aufbringbar ist.

8. Wärmedämmverbundsystem umfassend eine Dämmplatte (2"), **dadurch gekennzeichnet, daß**
die Dämmplatte (2") ein Wärme- und/oder Schalldämmmaterial nach einem der Ansprüche 1 bis 4 umfaßt.

9. Wärmedämmverbundsystem nach Anspruch 8, **dadurch gekennzeichnet, daß**
das Wärmedämmverbundsystem auf einer Außenwand (1") eine Klebemasse (4"), darauf zumindest eine Dämmplatte (2"), auf der Dämmplatte (2") eine Armierungsschicht (5") und auf der Armierungsschicht (5") eine Schlußbeschichtung (6") aufweist.

## Claims

1. Heat and/or sound insulation material, encompassing natural materials, wherein crushed feathers of animals and a binding agent are used, **characterised in that** the feathers of animals are pulverised in the unadulterated state to a maximum length of up to 3 mm and are mixed with the binding agent which, particularly in the case of moistening, provides an alkaline environment for the feathers.

2. Heat and/or sound insulation material according to Claim 1, **characterised in that** the binding agent comprises water glass, a water glass compound, lime, cement and/or clay.

3. Heat and/or sound insulation material according to Claim 1 or 2, **characterised in that**
the feathers are provided from the plumage of fowl, in particular water fowl.

4. Heat and/or sound insulation material according to one of the preceding claims,
**characterised in that**
it can be used as a plaster material, in particular in the final coat or rendering, or as an insulation panel, particularly externally.

5. Heat insulation plaster (2) which is applied on an external wall (1) and is provided with a final coat (3) as a final coating, **characterised in that**
the heat insulation plaster (2) comprises a heat and/or sound insulation material according to one of the preceding claims.

6. Final coat (2') which is applied on an external wall (1') as a final coating,
**characterised by**
a heat and/or noise insulation material according to one of Claims 1 to 4.

7. Final coat according to Claim 6, **characterised in that**
a rendering or at least an insulation panel (3') can first be applied on the external wall (1'), in particular by means of a glue (4'), and the final coat (2') can be applied thereupon.

8. Composite heat insulation system encompassing an insulation panel (2"),
**characterised in that**
the insulation panel (2") comprises a heat and/or sound insulation material according to one of Claims 1 to 4.

9. Composite heat insulation system according to Claim 8, **characterised in that** the composite heat insulation system has on an external wall (1") a glue (4"), thereupon at least one insulation panel (2"), on the insulation panel (2") a reinforcing layer (5") and on the reinforcing layer (5") a final coating (6").

## Revendications

1. Matériau d'isolation thermique et/ou sonore, comprenant des matériaux naturels, dans lequel des plumes broyées d'animaux et un liant sont utilisés, **caractérisé en ce que**
les plumes d'animaux sont broyées à l'état naturel jusqu'à une longueur de 3 mm au maximum et mélangées avec le liant, qui fournit un environnement alcalin pour les plumes, en particulier avec une humidification.

2. Matériau d'isolation thermique et/ou sonore selon la revendication 1,
**caractérisé en ce que**
le liant comprend du verre soluble, un composé de verre soluble, de la chaux, du ciment et/ou de l'argile.

3. Matériau d'isolation thermique et/ou sonore selon la revendication 1 ou 2, **caractérisé en ce que**
les plumes sont fournies par le plumage d'oiseaux, en particulier d'oiseaux aquatiques.

4. Matériau d'isolation thermique et/ou sonore selon l'une quelconque des revendications précédentes, **caractérisé en ce que**
il peut être utilisé comme matériau d'enduit, en particulier dans l'enduit de finition ou le fond d'enduit, ou en tant que plaque d'isolation, en particulier pour l'extérieur.

5. Enduit d'isolation thermique (1), qui est appliqué sur une paroi extérieure (1) et est muni d'un enduit de finition (3) en tant que couche finale, **caractérisé en ce que**
l'enduit d'isolation thermique (2) comprend un matériau d'isolation thermique et/ou sonore selon l'une quelconque des revendications précédentes.

6. Enduit de finition (2'), qui est appliqué sur une paroi extérieure (1') en tant que couche finale, **caractérisé par**
un matériau d'isolation thermique et/ou sonore selon l'une quelconque des revendications 1 à 4.

7. Enduit de finition selon la revendication 6, **caractérisé en ce que**
sur la paroi extérieure (1') peut d'abord être appliqué un fond d'enduit ou au moins une plaque d'isolation (3'), en particulier par l'intermédiaire d'une matière adhésive (4), et l'enduit de finition (2') peut être appliqué par-dessus.

8. Système composite d'isolation thermique comprenant une plaque d'isolation (2"), **caractérisé en ce que**
la plaque d'isolation (2") comprend un matériau d'isolation thermique et/ou sonore selon l'une quelconque des revendications 1 à 4.

9. Système composite d'isolation thermique selon la revendication 8,
**caractérisé en ce que**
le système composite d'isolation thermique présente sur une paroi extérieure (2") une matière adhésive (4"), au moins une plaque d'isolation (2") venant par-dessus, une couche d'armature (5") venant sur la plaque d'isolation (2") et une couche finale (6") venant sur la couche d'armature (5").
